(19) Europäisches Patentamt European Patent Office Office européen des brevets

(11) **EP 1 633 212 B1**

(12) **EUROPEAN PATENT SPECIFICATION**

(45) Date of publication and mention
of the grant of the patent:
**06.01.2010 Bulletin 2010/01**

(51) Int Cl.:
*A23P 1/04* (2006.01)  *A23L 1/30* (2006.01)
*A23L 1/29* (2006.01)  *A23L 1/307* (2006.01)

(21) Application number: **04728559.8**

(22) Date of filing: **21.04.2004**

(86) International application number:
**PCT/EP2004/004246**

(87) International publication number:
**WO 2004/105520 (09.12.2004 Gazette 2004/50)**

(54) **SATIETY ENHANCING FOOD PRODUCTS**

NAHRUNGSMITTEL ENTHALTEND SÄTTIGUNGSMITTEL

ALIMENTS CONTENANT DES AGENTS DE SATIETE

(84) Designated Contracting States:
**AT BE BG CH CY CZ DE DK EE ES FI FR GB GR
HU IE IT LI LU MC NL PL PT RO SE SI SK TR**

(30) Priority: **28.05.2003 EP 03076646**

(43) Date of publication of application:
**15.03.2006 Bulletin 2006/11**

(73) Proprietors:
• **Unilever N.V.
3013 AL Rotterdam (NL)**
Designated Contracting States:
**AT BE BG CH CZ DE DK EE ES FI FR GR HU IT LI
LU MC NL PL PT RO SE SI SK TR**
• **Unilever PLC
London
EC4Y 0DY (GB)**
Designated Contracting States:
**CY GB IE**

(72) Inventors:
• **VAN BENTHUM, Wilhelmus, A.J.
NL-3133 AT Vlaardingen (NL)**
• **DUCHATEAU, Gustaaf, S.M.J.E.
NL-3133 AT Vlaardingen (NL)**
• **PETERS, Henricus, P.F.
NL-3133 AT Vlaardingen (NL)**

(74) Representative: **Wurfbain, Gilles L. et al
Unilever Patent Group
Olivier van Noortlaan 120
3133 AT Vlaardingen (NL)**

(56) References cited:
**EP-A- 0 782 883    DE-A- 2 701 361**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

Field of Invention

The present invention relates to food products comprising a satiety agent.

Background of the invention

The incidence of obesity and the number of people considered overweight in countries where a so-called Western diet is adopted has drastically increased over the last decade. Since obesity and being overweight are generally known to be associated with a variety of diseases such as heart disease, hypertension and arthereosclerosis, this increase is a major health concern for the medical world and for individuals alike. Furthermore, being overweight is considered by the majority of the Western population as unattractive.

This has led to an increasing interest by consumers in their health and has created a demand for products that help to reduce or control daily caloric intake and/or control body weight and/or bodily appearance.

Several solutions have been proposed to help individuals to control their weight. Among these solutions is the use of drugs e.g. to suppress the activity of enzymes in the digestive system. However the use of drugs is often not preferred unless strictly required for medical purposes.

Another proposed solution is to prescribe the individuals a specific diet, for example, a diet with a restricted caloric intake per day. A problem with these diets is that often they do not provide a healthy nutritional balance and/or they are difficult to accommodate in modern lifestyles.

Meal replacer products have also been proposed as part of a healthy diet in order to control or reduce body weight. For example, US 5,688,547 discloses a nutritional meal replacement composition comprising dietary fibre, protein and a cellulose gum and gel.

These meal replacer products are generally products that are intended to be consumed as a single-serving food product, such as a bar, drink etc to replace one or two meals per day. The meal replacer products are designed such that on the one hand they provide a restricted caloric intake, but on the other hand they provide a healthy balance of nutritional ingredients and are convenient to incorporate into an individual's daily diet.

However, a problem with meal replacer products is that sometimes the time-span between meals is fairly long e.g. from 3 to 6 hours and/or the products have a fairly low energy content. Feelings of hunger may therefore occur sooner than desired which may render it difficult for the individual to adhere to the plan or it may make it and/or the products used therein less appealing to consumers.

Recognising the demand for effective and convenient satiety-inducing food products, research has been carried out to try to address the problems associated with the above approaches to controlling or reducing body weight.

One approach to addressing the aforementioned problems has been to investigate the use of satiety agents in food products in order to increase the satiety effect obtained from consuming a food product comprising the satiety agents. This should aid an individual to be able to better adhere to a weight loss or weight control plan and/or should improve the individual's satisfaction with the plan as less feelings of hunger should be experienced.

Several agents have been proposed for the purpose of improving or inducing satiety.

US 4,198,400 discloses the use of dietary fibres in juice and soup compositions to aid a feeling of satiety.

WO 01/17541 discloses a composition comprising proteins, high levels of calcium, medium or long chain fatty acids and a source of a proteinase inhibitor extracted from potatoes to promote satiety.

WO 99/02041 discloses a food composition giving a prolonged feeling of satiety and comprising a mixture of specific triglyceride oils and a food emulsifier.

WO 02/00042 discloses food compositions comprising satiety agents which are chosen from long chain fatty acids, their non-glyceryl esters and mixtures thereof and where the satiety agents are released in the stomach.

WO 01/17377 discloses uronic acid-containing polysaccharides cross-linked to each other to form a sponge-like structure that dissolves poorly in water, gastro-intestinal fluids and which are poorly reabsorbed in order to provide a satiety effect.

Another approach to reduce the feeling of hunger, and thus promote a feeling of satiety, which has been suggested is to use the principle of the ileal brake. The ileal brake principle itself is described by Gregg W. Van Citters in The Ileal Brake: A fifteen-year progress report, Current Gastroenterology Reports 1999, 1:4040-409 and which concerns the delivery of satiety agents to parts of the gut e.g the ileum, duodenum or jejunum. Reference to the principle of the ileal brake is also made in "Does the site of intestinal delivery of oleic acid alter the ileal brake response" by Dobson et al, Int Journal of Pharmaceutics, 195 (2000) 63-70.

EP 246 294 describes enteric preparations for the treatment of obesity and for weight control. The enteric compositions are capsules, tablets or microcapsules to be taken 2-3 hours before each meal and comprising an saturated or unsaturated fatty acid having 14-24 carbon atoms or lauric acid or a physiologically acceptable salt or triglyceride thereof and with a coating which is resistant to gastric juice and which dissolves in the ileum. Suitable coatings are disclosed to be based on cellulose derivatives esterified with phthalic acids, hydroxypropylmethyl-cellulose phthalate and polymers based on methacrylic acid or copolymers based on methacrylic methylester.

US 5,753,253 describes the control of appetite by the release of an active ingredient predominantly in the ileum. The active ingredient may include sugars, fatty acids, polypeptides and amino acids. A preferred embodiment is an enteric coated nutrient which may be administered as tablets or as a slurry drink with or between meals. Preferred coatings are pH sensitive polymers such as Eudragit S or diazotized polymers.

US 6,267,988 also describes the control of appetite by the release of an active ingredient predominantly in the ileum. A selective enteric coating is used and encapsulated particles are produced which have a particle size of between 1 and 3 mm.

US 2002/0094346 discloses methods and compositions for the absorption of ingested nutrients in the small intestines to trigger the ileal brake response. The compositions may be provided in hard or soft capsules but the intended effect is to prevent gastrointestinal complaints and weight loss rather than promote it.

DE 2701361 discloses gelatin capsules having a particle size of less than 0.2 mm, which gelatin capsules are solubilised in the intestines to release the active substance contained in the capsules.

EP-A-782883 discloses an edible microcapsule comprising an edible hydrophobic substance such an vegetable oil and/or animal oil. The edible microcapsules have a cross-linked capsule wall.

US 2003/0203004 (published 30 October 2003) discloses compositions comprising short and long chain fatty acids and methods of their use for the management of body weight. Tablets, capsules and food compositions comprising these fatty acids are disclosed.

However, despite the above developments, there is still a need in the art for edible compositions that provide a good satiety effect for consumers, especially those wishing to control their calorie intake and/or body weight. In particular, there is a need for compositions which provide good satiety effects, which are of acceptable taste and texture for the consumer, which are convenient to manufacture and which are stable during manufacture and upon storage. This is especially applicable to meal replacement products or other calorie-controlled products that are intended to be consumed as part of a weight loss or weight control plan, especially to aid adherence thereto.

In particular several problems are still frequently encountered, for example, the satiety agents are often not in a sufficiently robust form to survive modern food preparation or processing methods and this may lead to problems such as reduced efficacy, impaired taste or texture, restriction of suitable processing conditions and/or instability of the satiety agent or of the food product itself. This instability may manifest itself as undesired interactions between the satiety agent and other ingredients in the food product, as a loss of efficacy of the satiety agent, or, as physical instability of the food product.

Moreover, the satiety agents are generally presented in a format which can be detected in the food product e.g. visually or during consumption because of (impaired) taste, texture or mouthfeel and this is not preferred by the consumer.

Furthermore many food products, especially meal replacer products or other food products intended to be consumed as part of a weight loss or weight control plan, often comprise minor ingredients, for example vitamin and/or mineral additives, which may detrimentally interact with satiety agents. If a satiety agent is added to such a product, it is desirable to reduce, and preferentially avoid, potentially detrimental interactions between the satiety agent and other ingredients of the food product.

Another possible problem in the formulation of the above types of food products is that it is not desirable to include ingredients in a food product which may create a negative impression on the consumer when declared on the pack or which are not suitable for incorporation in food products. In this context the use of the polymers as described in EP 246 294 and US 5,753,253 is less preferred.

Another problem, therefore, is the provision of food products which address one or more of the above mentioned problems and which comprise conventional, preferably natural, food ingredients.

The present invention seeks to address one or more of the above-mentioned problems.

In particular, it is an object of the invention to provide food products that have a good satiety effect.

It is a further object of the invention to provide food products, especially meal replacer products and products to be used in a weight loss or weight control plan, that have an improved satiety effect compared to conventional types of such food products.

It is also an object of the invention to provide a method, and food products to be used therein, to aid an individual adhere to a weight loss or weight control plan (e.g. a calorie controlled diet), and/or to control body weight and/or to improve or maintain the perception of body image or body weight.

It is a further object of the invention to provide food products comprising a satiety agent that is capable of being controllably released in the intestine and yet the food product and the satiety agent are stable under normal storage conditions for that type of food product, and/or do not suffer from undesired detrimental interactions between the satiety agent and other ingredients in the food product (e.g. vitamin and/or mineral components), and/or do not suffer from undesired taste, mouthfeel or texture of the product.

It is also an object of the invention to provide food products comprising a satiety agent, which food products can be prepared by, and which are not substantially negatively affected by, conventional food processing and food preparation techniques.

In particular, there is a need for food products, especially meal replacer products and food products to be used as part of a weight loss or weight control plan which address one or more of the above problems.

We have found that encapsulated satiety agents are very advantageous when seeking to address one or more of the above problems. In particular, we have found that cross-linked encapsulant materials are very advantageous, especially those comprising a protein and a carbohydrate.

The use of a gelatin and a carbohydrate as an encapsulant material is known in the pharmaceutical art, for example from "Indomethacin sustained release from alginate-gelatin or pectin-gelatin coacervates" by Joseph et al, Int Journal of Pharmaceutics 126(1995), 161-168.

Cross-linked encapsulants made from gelatin are known, for example from US 5,071,706; US 3,956,172 and US 5,023,024. Also cross-linking encapsulants made from gelatin and a carbohydrate are known. See for example "The effect of gelatin cross-linking on the bioequivalence of hard and soft gelatin acetaminophen capsules" by Meyer et al, Pharmaceutical Research, vol 17, no 8, 2000; US 5,051,304; US 3,956,172; US 5,035,896; US 5,266,335 and "Cross-linking of gelatin capsules and its relevance to their in-vitro in-vivo performance" by Digenis et al, Journal of Pharmaceutical Sciences, vol 83, no 7, July 1994.

Particles comprising sunflower oil and β-carotene encapsulated in a cross-linked gelatin/gum arabic coating are disclosed in WO 02/41711. The particles are incorporated into fat based foods such as spreads. The level of cross-linking is about 18%.

<u>Summary of the Invention</u>

Surprisingly we have now found that when satiety agents are used in an encapsulated form in food products comprising at least 2% by weight protein (excluding any protein present in the encapsulation material used for the satiety agent), the encapsulant material is cross-linked and the satiety agent is released predominantly in the intestines, excellent results are obtained, especially with respect to satiety, stability and the ability of the encapsulated satiety agents to withstand conventional food processing / food preparation techniques.

Thus according to a first aspect, the present invention provides a food product comprising an encapsulated satiety agent and at least 2%wt protein, excluding any protein present as or in the encapsulated satiety agent, wherein the satiety agent is encapsulated by cross-linked encapsulation material and further wherein upon consumption of the food product by a subject the satiety agent is predominantly released from the encapsulation material in the intestines of that subject.

According to a second aspect, the invention provides a method of preparing a food product according to the first aspect, wherein the encapsulated satiety agent of the first aspect is admixed with at least one other food product ingredient to form the food product.

Preferably the food product is a meal replacer or weight control product. It is also preferred that the encapsulated satiety agent has a weight average particle size in the range of from 0.5 to 250 μm. Furthermore, it is preferred that the satiety agent is predominantly released in the ileum and/or the jejunum, most preferably in the ileum.

The present invention provides an effective and convenient method of providing good satiety effects. Furthermore, the products do not suffer from impaired mouthfeel, texture or taste, are stable and can be produced by conventional techniques.

The advantages of the present invention include greater efficacy of the satiety effect; for example an enhanced feeling of satiety, feeling satiated sooner whilst eating and/or remaining satiated for a longer period of time after eating. These advantages are especially beneficial for the compliance with dietary plans or programmes and/ or the control or maintenance of body weight and/or body perception. There are also longer-term advantages associated with helping in the prevention of diseases related to being overweight.

The term "comprising" is meant not to be limiting to any subsequently stated elements but rather to encompass non-specified elements of major or minor functional importance. In other words the listed steps, elements or options need not be exhaustive. Whenever the words "including" or "having" are used, these terms are meant to be equivalent to "comprising" as defined above.

Except in the operating and comparative examples, or where otherwise explicitly indicated, all numbers in this description indicating amounts of material or conditions of reaction, physical properties of materials and/or use are to be understood as modified by the word "about." All amounts are by weight, based on the total weight of the relevant product, unless otherwise specified.

The terms "satiety agent" and "encapsulated satiety agent" as used herein, refer to the material which is encapsulated by the cross-linked encapsulation material.

A feeling of satiety as referred to herein means a greater or enhanced feeling of satiety (satiation) after eating and/or a longer lasting feeling of satiety after eating. Such effects typically reduce feelings of hunger and/or extend the time between food intake by an individual and can result in a smaller amount of food and/or fewer calories consumed in a single or subsequent sitting. The references herein to satiety include both what is strictly referred to as satiation and satiety, including end of meal satiety and between meals satiety. Satiety may also be perceived by an individual as a feeling of 'fullness', reduced hunger and/or reduced appetite.

Detailed description of invention

Satiety agents

Any satiety agent may be used according to the invention.
Satiety agents are any materials which when delivered to the jejeunum and/or ileum are capable of activating the ileal brake as disclosed by Gregg W. Van Citters in The Ileal Brake: A fifteen-year progress report, Current Gastronenterology Reports 1999, I:4040-409.
The satiety agent may comprise a protein (or a protein derived material such as protein isolate or a peptide) or a carbohydrate. However, lipids are the preferred satiety agents, especially when a coacervation technique is used to encapsulate the satiety agent.
Preferred satiety agents are mono, di or tri-glycerides, their free fatty acids, their edible salts, their non-glyceryl esters, hydrolyzable in the presence of gastro-intestinal enzymes, and mixtures thereof.
Satiety agents comprising fatty acids having 12-26 carbon atoms, preferably 14 to 20, e.g. 16 to 18, have been found to be especially advantageous. Those having some degree of unsaturation, that is at least one unsaturated bond per fatty acid have been found to be very suitable. Particular reference can be made here to omega 3 and omega 6 fatty acids and oils with additional functionality (e.g. enhanced energy metabolism effects) such as conjugated linoleic acid and diglyceride-rich oils.
The fatty acids are preferably selected from lauric acid, lauroleic acid, myristic acid, myristoleic acid, pentadecanoic acid, palmitic acid, palmitoleic acid, margaric acid, stearic acid, dihydroxystearic acid, oleic acid, ricinoleic acid, elaidic acid, linoleic acid, conjugated linoleic acid and its isomers, alpha-linolenic acid, dihomogamma-linolenic acid, eleostearic acid, licanic acid, arachidonic acid, arachidic acid, eicosenoic acid, eicosapentaenoic acid, behenic acid, erucic acid, docosahexaenoic acid, lignoceric acid and isomers and mixtures thereof.
Preferred fatty acids are selected from the group consisting of oleic acid, linoleic acid and mixtures thereof.
Non-glyceryl fatty acid esters include but, are not limited to, alcohol esters wherein said alcohol portion of the ester is selected from the group of alcohols consisting of methanol, ethanol, 5 n-propanol, isopropanol, n- butanol, isobutanol and mixtures thereof, preferably ethanol. Preferred non-glyceryl fatty acid esters are selected from the group consisting of ethyl oleate, ethyl linoleate and mixtures thereof.
The satiety agent is encapsulated by a cross-linked encapsulation material. The satiety agent only may be encapsulated, or, other ingredients may also be present in the encapsulated material. It is preferred that the encapsulated material comprises at least 40%wt of the satiety agent, more preferably at least 50%wt, most preferably at least 70%wt. It has been found to be especially advantageous if the encapsulated material comprises at least 90%wt of the satiety agent.
The other ingredients which may be present in the encapsulated material include those selected from vitamins, minerals, emulsifiers, water, processing and stabilising agents, colourants and flavourants etc.
The food product preferably comprises an amount of from 0.1 to 20%wt of the satiety agent (excluding the cross-linked encapsulation material). More preferably the food product comprises 0.1 to 10%wt thereof, most preferably 0.1 to 5%wt.
The amount of the satiety agent provided per typical serving, or 100g, of the food product is usually within the range of from 0.1 to 20g, preferably 0.5 to 10g, especially 1 to 5g.
Preferably the encapsulated satiety agents may be added to conventional foodstuffs, or, they can be consumed prior to, during, after or instead of an ordinary meal.
The encapsulated satiety agents are preferably in the form of microcapsules. Furthermore the encapsulated satiety agents preferably have a weight average mean particle size in the range of from 0.5 to 250 $\mu$m, more preferably 1 to 100 $\mu$m, most preferably 2 to 75 $\mu$m. Particle sizes below 50 $\mu$m, e.g. 3 to 25 $\mu$m, especially 4 to 10 or 15 $\mu$m have been found to be particularly advantageous in providing good properties, e.g. mouthfeel and texture, to the food products.

Encapsulant material

The encapsulant material has a degree of cross-linking of at least 20% and which may be up to 100%. It is preferably in the range of from 30 to 95%, most preferably in the range of from 40 to 90%, such as 50 to 80%. The degree of cross linking is defined as:

**(number of cross-linked sites/number of reactable cross-linking sites ) X 100.**

By "reactable" is meant sites which in theory may form a covalent bond.

The degree of cross-linking as given herein is an average degree of cross-linking for the material used. As is common with all chemical reactions, there will a number of encapsulated particles that have a degree of cross-linking outside the given ranges, but the average degree of cross-linking should be as given. According to one embodiment of the present invention, an encapsulated satiety agent having varying degree of cross-linking may be used in the food products. Therefore, it is possible to add a given amount of an encapsulated satiety agent which has one degree of cross-linking and a given amount of the same encapsulated satiety agent which has one or more different degree(s) of cross-linking. For example, 10 grams of an encapsulated satiety agent having a degree of 50% cross-linking could be used or instead an encapsulated satiety agent mixture could be used comprising 3 grams which are 20% cross-linked, 3 grams which are 35% cross-linked and 4 grams which are 50% cross-linked provided that the average degree of cross-linking of the mixture is at least 20%.

Where the cross-linking is achieved by the use of cross-linking agents, any conventional cross-linking agent may be used according to the invention. The skilled person is readily able to select the type of cross-linking agent and the amount to be used in order to achieve the desired level of cross-linking. Suitable cross linking agents include gluteraldehyde, formaldehyde, genipin and the other cross-linking agents disclosed in US 5,023,024. Gluteraldehyde is especially preferred.

Optionally said cross-linking may be obtained under application of an enzyme suitable as a catalyst for cross-linking of a protein or other compounds in the encapsulation material. Suitable enzymes are for example transglutaminases, peroxidases, laccases, tyrosinases or combinations thereof. The selection of enzyme is believed to be related to the protein or compound that is used as a substrate for cross-linking as some of the mentioned enzymes are known to be substrate specific. A preferred combination is transglutaminase with protein, with the proviso that whey protein if used is preferably in the denatured state.

The encapsulant material may be chosen from any suitable material. It preferably comprises one or more proteins and/or carbohydrates, more preferably one or more proteins and one or more carbohydrates.

Proteins which may be used as the entire encapsulant material, or as a part thereof, include gelatin, milk proteins (including caseinates, such as sodium caseinate, and whey proteins such as beta-lactoglobulin and alpha lactalbumin), albumin and vegetable proteins including proteins from beans, legumes and cereals such as soy, pea, maize and wheat and isolated soy proteins.

Carbohydrates which may be used as the entire encapsulant material, or as a part thereof, include mono or polysaccharides including, cellulose polymers and starches, (including hydrolysed and modified starches) and sugar alcohols. For the purpose of this invention, sugar alcohols are considered to be carbohydrates. Suitable materials include gum arabic, carrageenan, agar agar, alginates, pectins and pectates.

According to the invention, encapsulant materials comprising gelatin and at least one of gum arabic, carrageenan, agar agar, alginate or pectins, especially gelatin and gum arabic, have been found to be very suitable.

Gelatin and gum arabic cross-linked with gluteraldehyde is very suitable for use according to the invention.

Also, especially where a vegetarian alternative is desired, sodium caseinate and either gum arabic, carrageenan, agar agar, alginates or pectins, especially sodium caseinate and gum arabic, have been found to be very suitable. Similarly, beta-lactoglobulin and either gum arabic, carrageenan, agar agar, alginate or pectins, especially beta-lactoglobulin and gum arabic.

Where both a protein and carbohydrate are used, the ratio of the protein to the carbohydrate is preferably in the range of from 60:40 to 40:60 based on the number of reactive groups per molecule. Preferably the ratio is in the range of from 55:45 to 45:55, such as 50:50.

Encapsulation

The term "encapsulated" refers both to an embodiment wherein a coating is formed around the satiety agent and to an embodiment wherein the satiety agent is trapped within or throughout a matrix. The encapsulated satiety agent preferably has a substantially integral encapsulant coating or matrix around it.

The encapsulated satiety agent particles comprise a lipophilic core and a hydrophobic wall. Any suitable method may be used to produce the encapsulated satiety agent particles.

An especially preferred method of preparing the encapsulated satiety agent, especially when it comprises a lipid satiety agent and a non-lipid encapsulation material is by simple or complex co-acervation. These techniques are well known in the art and it is well within the abilities of the skilled person to establish the types and processes and process conditions that may suitably be applied.

In general coacervation describes the phenomenon of salting out or phase separation of lyophilic colloids into liquid droplets rather than solid aggregates. Coacervation of a polymeric ingredient can be brought about in a number of different ways, for example a change in temperature, a change of pH, addition of a low molecular weight substance or addition of a second macromolecular substance. Two types of coacervation exist: simple coacervation and complex coacervation. In general, simple coacervation usually deals with systems containing only one polymeric ingredient, while complex coacervation deals with systems containing more than one polymeric ingredient.

Complex coacervation is especially preferred according to the present invention. Complex coacervation is a well-known phenomenon in colloid chemistry, an overview of coacervation techniques for encapsulation is for example provided by P.L. Madan c.s. in Drug Development and Industrial Pharmacy, 4(1), 95-116 (1978) and P.B. Deary in "Microencapsulation and drug processes", 1988 chapter 3. To obtain complex coacervation (at a certain pH) one of the (bio)polymer types needs to be positively charged and the other has to be negatively charged. During complex coacervation the pH is in between the respective isoelectric points (IEP) of the (bio)polymers used. This means that the IEPs are preferably sufficiently far apart. The suitable pH for complex coacervation depends on the concentrations of (bio)polymers used.

When a-coacervation technique is used, the satiety agent is very preferably a lipid in order to optimise delivery thereof to the intestines.

## Release of the encapsulated satiety agent

The satiety agent is predominantly released in the intestines. The satiety agent will typically slowly be released continuously during its transit through the digestive tract, but, it is preferred that it is predominantly released in the jejunum and/or ileum, most preferably in the ileum.

By the term "predominantly released" as used herein is meant that the satiety agent is mainly released from the encapsulant in the place specified. If the satiety agent is released in several places during its transit through the digestive tract, 50 %wt or more of the satiety agent is not necessarily released in the place specified but the largest single release of the satiety agent occurs there. For example, if the satiety agent is released 25%wt in the duodenum, 30%wt in the jejunum and 45%wt in the ileum then it is predominantly released in the ileum.

It is preferred that 40-100%wt of the satiety agent is released in the ileum, more preferably 45-90%wt, most preferably 50-80%wt, especially 55-70%wt. Some of the satiety agent may also be released in other parts of the digestive tract such as the stomach, duodenum and jejunum. It is preferred that less than 30%wt, more preferably less than 20%wt, especially less than 10%wt of the satiety agent is released in the stomach.

A preferred release profile for the satiety agent 20 %wt or less released in the duodenum, 0-40%wt released in the jejunum and 40-100%wt released in the ileum. Even more preferred is a release profile wherein 10%wt or less is released in the duodenum, 20-30%wt is released in the jejunum and 45-80%wt is released in the ileum.

Without wishing to be bound by theory, it is believed that when the satiety agent is released over more than one part of the intestine, e.g. in both the jejunum and ileum, the efficacy of the satiety agent is aided.

To provide for good release of the satiety agent into the intestines, ideally less than 30%wt of the satiety agent is released during exposure to gastric conditions for 1 hour, preferably less than 20%wt, most preferably less than 10%wt. This generally allows sufficient time for the passage of the food product through the stomach and into the intestines.

## Food product

The food product may any desired type and in any desired form including bars and beverages. Especially preferred food products are those which are intended to be used as part of a weight loss or weight control plan, such as a meal replacement product.

Suitable food products include milk based drinks, soy based products including drinks and bars, breads, cereal based products (including pasta and cereal bars), cakes, biscuits, spreads, oil-in-water emulsions (such as dressings and mayonnaise), ice creams, desserts, yogurts, soups, powdered soup concentrates, sauces, sport drinks, health bars, fruit juices, confectionery, snack foods, ready-to-eat and pre-packed meal products and dried meal products etc.

The food product may be for example a powder which is mixed with a liquid, e.g. water or milk, to produce a liquid or slurry product such as a meal replacer product.

The term "meal replacer" as used herein refers to a product which is intended to replace one or more conventional meals a day as part of a weight loss or weight plan; they are of a controlled calorie content and are generally eaten as a single product. The term also includes products which are eaten as part of a meal replacement weight loss or weight control plan, for example snack products which are not intended to replace a whole meal by themselves but which may be used with other such products to replace a meal or which are otherwise intended to be used in the plan; these products typically have a calorie content in the range of from 50-150 kilocalories per serving.

Examples of meal replacement products include; liquid products such as milk or soya-based drinks, soluble powders used to prepare those drinks and drinks prepared therefrom, bars, soups, cereal or noodle or pasta-based products, desserts such as rice puddings, custards, and the like and porridge and the like. Meal replacers are generally used by consumers following a calorie controlled diet.

Meal replacers are especially preferred food products according to the invention. They have been found to be especially suitable as they can provide good satiety effects combined with restricted calorie content in a convenient form. It is especially preferred that the meal replacer is a ready to drink liquid, a liquid produced from a soluble powdered product, a soup, a dessert, a bar, a cereal based or pasta based or noodle based product, or, a soluble powdered product.

The calorie content of the meal replacer is preferably in the range of from 50 kilocalories (kcals) to 600 kcals, more preferably 100 kcals to 500 kcals, most preferably 150 kcals to 450 kcals per serving.

Other food products intended to be used as part of a weight loss or weight control plan typically have fewer calories per serving (or per 100 g of product) than their 'non-diet' equivalents. The calorie content of these foods is deliberately restricted accordingly. Examples include the so-called low-calorie options of every day foods such as ice-cream, cream, cakes, puddings, yoghurt etc. Meal replacer products do not generally fall in this category as there may be no 'full calorie equivalent' product and also it is necessary to provide a reasonable number of calories per meal replaced.

The amounts of protein, fat, carbohydrate and other ingredients in the food product will vary according to the product format of the composition and also, where required, according to national or regional legislation.

The edible composition will typically comprise protein. It is preferred that the product comprises at least 1%wt protein (excluding any protein present as/in the encapsulated satiety agent) based on the weight of the product. Preferably the product comprises protein in an amount of from 1.5 to 25%wt, preferably 2 to 20%wt.

The protein may be chosen from any source, including milk proteins, egg proteins, animal proteins and plant proteins.

It has been found that the food products may advantageously comprise a whey protein and/or soy protein and/or a hydrolysate of either soy or whey, preferably in an amount of from 0.1% to 20% by weight of the product. Especially suitable whey protein hydrolysates comprise hydrolysates of $\beta$-lactoglobulin, $\alpha$-lactalbumin or a mixture thereof.

It is further preferred that the protein provides up to 75% of the total calories of the product, more preferably between 10% and 40%, most preferably between 15 and 35%.

The food product may comprise edible fats (excluding any present as/in the encapsulated satiety agent), preferably in an amount of up to 60 or 70% by weight based on the weight of the product, more preferably from 0.5 to 30 or 35%wt, most preferably from 0.75 to 10 or 20%wt fat. Any suitable fat may be used for example, animal fats, vegetable fats, plant oils, nut oils, seed oils, or mixtures thereof. Saturated or unsaturated (mono-unsaturated and poly-unsaturated) fats may be used.

The food products may also comprise one or more carbohydrates (excluding any present as/in the encapsulated satiety agent), preferably in an amount of from 1 to 95% by weight based on the weight of the product, more preferably 2 to 60%wt, most preferably 5 to 50%wt, such as 10 to 40%wt. Any suitable carbohydrate may be used, for example sucrose, lactose, glucose, fructose, corn syrup, sugar alcohols, maltodextrins, starch, modified starch or mixtures thereof.

The food product may also comprise soluble or insoluble dietary fibres, for example in an amount of from 0.1 to 40 or 50% by weight based on the weight of the product, preferably 0.5 to 20%wt.

The edible composition may comprise dairy products such as milk, yoghurt, kefir, cheese or cream for example in an amount up to 70% by weight based on the weight of the composition, preferably 1 to 30 or 50%wt. Alternatively soy-protein based ingredients used in the same amounts. The inclusion of these ingredients will be chosen so that the desired amount of protein, fat and carbohydrates etc are included in the food product.

The food product may also comprise stabilisers. Any suitable stabiliser may be used, for example starches, modified starches, gums, pectins or gelatins. The product may comprise of from 0.01 to 10% by weight, preferably 1 to 5%wt of stabiliser based on the weight of the product.

The food product may comprise one or more emulsifiers. Any suitable emulsifier may be used, for example lecithins, egg yolk, egg-derived emulsifiers, diacetyl tartaric esters of mono, di or tri glycerides or mono, di, or triglycerides. The composition may comprise of from 0.05 to 10% by weight, preferably from 0.5% to 5%wt of the emulsifier based on the weight of the product. These amounts are in addition to any amounts of these products which may be present as/in the encapsulated satiety agents.

The food product may comprise up to 60% by weight of fruit or vegetables particles, concentrates, juice or puree based on the weight of the product. Preferably the products comprise 0.1 to 40%wt, more preferably 1 to 20%wt of these ingredients. The amount of these ingredients will depend upon the type of product; for example soups will typically comprise higher levels of vegetables than will a milk based meal replacement drink.

The food product may also comprise 0.1 to 20 % by weight of edible salts based on the weight of the product, preferably 0.5 to 10%wt, more preferably from 1 to 5%wt. Any edible salts may be used, including alkaline and alkaline earth metal salts. Suitable examples include, sodium chloride, potassium chloride, calcium salts such as calcium chloride and calcium caseinate and alkali metal or alkaline earth metal salts of citric acid, lactic acid, carbonic acid, benzoic acid, ascorbic acid, or, mixtures thereof.

The food product may comprise one or more cholesterol lowering agents in conventional amounts. Any suitable, known, cholesterol lowering agent may be used, for example isoflavones, phytosterols, soy bean extracts, fish oil extracts, tea leaf extracts.

The food product may optionally comprise, in suitable amounts, one or more agents which may beneficially influence (postprandial) energy metabolism and substrate utilisation, for example caffeine, flavonoids (including tea catechins, capsaicinoids and canitine).

The food product may comprise up to 10 or 20% by weight, based on the weight of the composition, of minor ingredients selected from added vitamins, added minerals, herbs, spices, flavourings, aromas, antioxidants, colourants, preservatives or mixtures thereof. Preferably the compositions comprise of from 0.05 to 15% by weight, more preferably 0.5 to 10% of these ingredients.

The product preferably comprises added vitamins and/or minerals, preferably selected from at least one of vitamins A, B1, B2, B3, B5, B6, B11, B12, biotin, C, D, E, H, and K and minerals calcium, magnesium, potassium, zinc, iron, iodine, manganese, molybdenum, phosphorous, selenium and chromium. The vitamins and/or minerals may be added by the use of vitamin premixes, mineral premixes and mixtures thereof or alternatively they may be added individually.

It is especially preferred that the food products to be used in a weight loss or weight control plan, for example meal replacer products, comprise at least 300 mg of potassium per serving, more preferably 400-1000, most preferably 450-700mg.

The food product may be prepared by any suitable conventional technique. Such techniques are well known to those skilled in the art and do not need to be described further here but may include mixing, blending, homogenising, high-pressure homogenising, emulsifying, dispersing, or extruding. The encapsulated satiety agent may be included by any suitable method known in the art which will be dependent upon the type of product. Preferably the encapsulated satiety agent of the first aspect is admixed with at least one other ingredient of the food product. The product may also be subject to a heat treatment step, for example pasteurisation or U.H.T. treatment.

Satiety and consumption of the food product

Consuming a product comprising an encapsulated satiety agent according to the invention is intended to enhance and/or prolong the feeling of satiety for the consumer and/or extend the time interval between meals and/or reduce the amount of calories consumed in the following meal. This in turn aids the individual concerned to better adhere to a weight loss or weight control plan. The consumption of a product according to the invention may occur as a part of a dietary plan, such as those to reduce or control body weight.

The subject consuming the food product may be either a human or an animal. The subject may consume the food product of the invention in connection with any one or more of the following; the treatment of obesity or being overweight; to improve or maintain the perception of body image; aiding compliance with a dietary plan e.g. to control, reduce or maintain body weight, including maintenance of desired body weight following previous weight loss; to extend the time elapsed between taking meals; to control, maintain or reduce daily calorie intake; to suppress appetite. The subject following that plan may be thus better able to reduce, control or maintain their body weight, e.g. by following the dietary plan for a longer period of time and/or adhering more closely to the plan as they feel less temptation to snack or over-eat.

The term "weight control or weight loss plan" as used herein includes regimes, plans and diets followed for controlling body weight and also those followed for medical reasons e.g. to loose weight or to aid other health problems adversely affected by being overweight or obese.

The invention is further exemplified by the following examples, which are to be understood as to be non-limiting. Further examples within the scope of the invention will be apparent to the person skilled in the art.

Examples

Example 1 - preparation of the encapsulated satiety agents.

The following process to prepare complex coacervates was used. Oleic acid was used as the satiety agent and a mixture of gelatine/gum arabic was used as the encapsulation material. The cross-linking agent was glutaric dialdehyde.

A 2wt% solution of 20 gram gum arabic in 1 litre of demineralised water was prepared. The gum was added while stirring at 60 °C. A 2wt% solution of 20 gram gelatine in 1 litre of demineralised water was prepared. The gelatine was added while stirring at 60 °C. The gum arabic and gelatine solutions were mixed together in a thermostatic vessel (2.5 litre volume and equipped with baffles) at 60 °C and 150 rpm using a ribbon stirrer. To this aqueous mixture of gelatine/gum arabic, 100 gram of oleic acid was added. The oleic acid/gelatine/gum arabic mixture was stirred with an ultra-turrax mixer (T25, IKA, Germany) for 1 minute at 13,500 rpm. Using a peristaltic pump (flow 100 ml/hour) 1.0 M hydrochloric acid was under stirring added until a pH of 4.2-4.3 was reached. The time for acidification was about 15 minutes. Complex coacervates were formed around the oleic acid droplets.

The vessel was cooled linearly from 60 °C to 10 °C in 16 hours and the formed complex coacervates were collected by filtration over a black band paper filter.

To obtain different batches for applying different levels of cross-linking, the batch of complex coacervates was separated in four different portions of 80 gram (wet weight) each. When the batch of complex coacervates was not separated an overall yield of -350 gram of complex coacervates was obtained.

To obtain a cross-linking degree of 100%, 40 ml of a 25wt% solution of glutaric dialdehyde solution was added.

Cross-linking was performed in 500 ml beaker containing 250 ml of demineralised water, 80 gram of wet complex coacervates and glutaric dialdehyde solution and was carried out overnight at room temperature with a stirrer. The stirring speed was about 35 rpm and the beaker was covered with thin foil to prevent reaction of glutaric dialdehyde under influence of light. The different batches of cross-linked complex coacervates were collected by filtration over a black band paper filter. Each batch was carefully washed with 1 litre of demineralised water to remove un-reacted glutaric dialdehyde solution. After the water washing, the complex coacervates were finally washed, to prevent microbiological contamination, with 100 ml of 0.1wt% potassium sorbate solution. The complex coacervates were stored in the dark in a closed vessel at 4°C. Under these conditions they were stable for at 6 least months.

To obtain degrees of cross-linking of 20, 30 and 50%, amounts of 8, 12 and 20 ml of a 25wt% glutaric dialdehyde solution are necessary for 20g gelatine.

Example 2 - Ready-to-drink formulation

A meal replacement ready-to-drink liquid may be prepared according to the formulation below.

Table 1

| Ingredient | Percentage by weight |
|---|---|
| Water | 75.5 |
| Sucrose | 2.0 |
| Encapsulates of Example 1. | 5.0 |
| Skimmed milk solids | 2.0 |
| High fructose corn syrup | 8.0 |
| Carrageenan gum | 1.0 |
| Vegetable oil | 2.0 |
| Caramel flavouring | 1.5 |
| Colourings, other flavourings | 1.0 |
| Vitamin / mineral premix | 2.0 |

The ingredients are added to the water and the composition mixed until an homogenous product is obtained.

The composition shows good satiety effects.

Example 3 - meal replacement bar product

A meal replacement bar product comprising an encapsulated satiety agent may be prepared according to the formulation below.

Table 2

| Ingredient | Percentage by weight |
|---|---|
| Honey | 16.0 |
| Sucrose | 10.0 |
| Whey protein isolate | 3.0 |
| Soy protein | 13.0 |
| Chopped dried fruit and nuts | 20.0 |
| Soy flour | 5.0 |
| Peanut butter | 5.0 |
| Maltodextrin | 4.0 |
| Oats | 6.0 |
| Bran fibre | 2.0 |
| Flavourings | 2.0 |
| Encapsulated satiety agent of Example 1. | 5.0 |
| Vitamin / mineral premix | 2.0 |
| Chocolate flavoured coating | To 100%wt |

The bar is made by thoroughly mixing together the honey and corn syrup with the peanut butter. The remaining ingredients except the chocolate flavoured coating are added and the mixture is further mixed and formed into a bar shape. To coat it the bar is passed through a curtain of molten chocolate flavoured coating. The bar is allowed to cool to solidify the coating.

Example 4 - In vitro stability of cross-linked coacervates under gastro-intestinal conditions

A study was undertaken to evaluate the effect of different degrees of cross-linking of the encapsulation material of the encapsulated satiety agent against enzymatic degradation under simulated gastro-intestinal conditions. The satiety agents encapsulated in cross-linked encapsulation material are herein referred to as 'complex coacervates'.

The in vitro stability of complex coacervates varying in the amount of cross-linking was examined in simulated gastric fluid (SGF) containing pepsin followed by simulated intestinal fluid (SIF) containing pancreatin in phosphate buffer. The reagents and assay procedure are described in the "United States Pharmacopeia" (Vol. XXII, 1990, <711> "Dissolution: Apparatus II").

Three distinctions to the standard USP protocol were made. Firstly, a 2ml Triton-X-100 solution was added to the 900 ml system to solubilize the lipids. Secondly, a pH dosing system that delivered acid or base was used to simulate more closely gastric and intestinal pH conditions. Five mol/L sodium hydroxide and 5 mol/L hydrochloric acid were used to adjust the pH of the matrix according to a pre-defined dosing profile, e.g. in the gastric conditions at t=0 minutes pH started at 6.8 and decreased gradually to pH 1.8 until t=60 minutes. At that time, SGF was changed to SIF and the pH increased to 5.5 within approximately 20 minutes and to 6.8 within approximately 30 minutes. At the time the pH of SIF reached 5.5 (between t=82 and 85 minutes) pancreatin was added. Thirdly, 325 ml of water in the 900 ml flasks was replaced by the same amount of the product of example 2. During the experiment 5 ml samples were taken at regular intervals. These samples were analyzed for lipid content using standard gas chromatographic methods with hexadecenoic acid as an internal standard.

Four different complex coacervates were used differing in the amount of cross-linking, e.g. complex coacervates with 20%, 40%, 60% and 100% cross-linking according to the definition given hereinbefore. Their release profile is shown in Table 3 which shows the amount of lipids (in % from total lipids*) released from complex coacervates differing in the amount of cross-linking of the encapsulation material in simulated gastric conditions (between T=0 and T=82 minutes) and intestinal conditions (between T=82 and T=150 minutes)**.

* data exceeding 100% are due to normal analytical and/or sampling variations

** All measurements were performed in duplicate. - indicates: not measured

Table 3.

| Time: | Degree of cross-linking of the encapsulation material | | | |
|---|---|---|---|---|
| | 20% | 40% | 60% | 100% |
| T=0 min | 6 | 4 | 4 | 8 |
| T=30 min | 5 | 4 | 6 | - |
| T=60 min | 8 | 10 | 13 | 7 |
| T=80 min | 6 | 6 | 5 | 7 |
| T=84 min | 67 | 23 | 9 | 6 |
| T=88 min | 112 | 36 | 10 | 8 |
| T=96 min | 98 | 99 | 31 | 7 |
| T=108 min | 104 | 105 | 58 | 7 |
| T=120 min | - | - | 94 | 7 |
| T=130 min | 107 | 111 | 90 | 89 |

As can be seen in Table 3, release profiles differ considerably between the different coacervates. For all the complex coacervates the majority of the release of lipids started in the simulated small intestine.

The 20% cross-linked complex coacervates released all their content within 8 minutes after the Pancreatin was added. After 4 minutes 67% of the lipids was released.

The release for the 40% cross-linked complex coacervates is somewhat delayed. It took about 8 minutes to release 36% of the lipids, whilst all lipids were released after 16 minutes under intestinal conditions.

The release was delayed even further for the 60% cross-linked version, while the release progressed most slowly for the 100% cross-linked version. Release for the 100% cross-linked complex coacervates did not start until 40 minutes under intestinal conditions. At the end of the experiment (at T=130 minutes) almost all lipids were released from the 100% cross-linked version.

From these data it can also be estimated when about 50% of the lipid content should be released from the different complex coacervates. For the 20, 40, 60 and 100% cross-linked version this was approximately at t=82 minutes, 89 minutes, 104 minutes and 125 minutes, respectively.

**Claims**

1.    Use of an encapsulated satiety agent comprising proteins, carbohydrates or lipids, the satiety agent being encapsulated by cross-linked encapsulation material, for the manufacture of a product for treating obesity or being overweight, wherein the product is a food product comprising at least 2 wt% protein, excluding any protein present as or in the encapsulated satiety agent, and further wherein upon consumption of the food product by a subject the satiety agent is predominantly released from the encapsulation material in the intestines of that subject.

2.    Use according to claim 1, wherein the satiety agent is a lipid.

3.    Use according to claim 1 or 2, wherein the satiety agent is selected from mono, di, or tri-glycerides, their free fatty acids, their edible salts, their non-glyceryl esters, hydrolyeable in the presence of gastro-intestinal enzymes and mixtures thereof.

4.    Use according to any one of the preceding claims, wherein the encapsulation material has a degree of cross-linking of at least 20%, preferably 30 to 95%.

5.    Use according to any one of the preceding claims, wherein the encapsulation material comprises one or more proteins and/or carbohydrates.

6.    Use according to claim 5, wherein the protein is selected from gelatins, milk proteins, albumin and vegetable proteins.

7.    Use according to claim 5, wherein the carbohydrate is selected from the group consisting of monosaccharides, polysaccharides and sugar alcohols.

8.    Use according to claim 7, wherein the carbohydrate is selected from the group consisting of gum arabic, carrageenan, agar agar, alginates, pectins and pectates.

9.  Use according to any one of the preceding claims, wherein the encapsulated satiety agent is encapsulated by a simple or complex coacervation process.

10. Use according to any one of the preceding claims, wherein the food product comprise an amount of from 0.1 to 10%wt of the satiety agent.

11. Use according to any one of the preceding claims, wherein the encapsulated satiety agent has a weight average mean particle size in the range of from 0.5 to 250 $\mu$m.

12. Use according to any one of the preceding claims, wherein the encapsulated satiety agent is predominantly released from the encapsulation material in the jejunum and/or ileum of the subject.

13. Use according to any one of the preceding claims, wherein the product is a meal replacer or weight control product.


**Patentansprüche**

1.  Verwendung eines eingekapselten Sättigungsmittels, das Proteine, Kohlenhydrate oder Lipide umfasst, wobei das Sättigungsmittel durch vernetztes Einkapselungsmaterial eingekapselt ist, zur Herstellung eines Produkts zur Behandlung von Adipositas oder Übergewicht, wobei das Produkt ein Nahrungsmittelprodukt ist, das wenigstens 2 Gewichts-% Protein, ausgenommen ein Protein, das als eingekapseltes Sättigungsmittel oder in dem eingekapselten Sättigungsmittels vorhanden ist, umfasst, und wobei außerdem das Sättigungsmittel bei Verzehr des Nahrungsmittelprodukts durch eine Testperson vornehmlich aus dem Einkapselungsmaterial im Intestinum der Testperson freigesetzt wird.

2.  Verwendung gemäß Anspruch 1, wobei das Sättigungsmittel ein Lipid ist.

3.  Verwendung gemäß Anspruch 1 oder 2, wobei das Sättigungsmittel aus Mono-, Di- und Triglyceriden, deren freien Fettsäuren, deren essbaren Salzen, deren Monoglycerinestern, die in Gegenwart von gastrointestinalen Enzymen hydrolysierbar sind, und Gemischen davon ausgewählt ist.

4.  Verwendung gemäß einem der vorangehenden Ansprüche, wobei das Einkapselungsmaterial einen Vernetzungsgrad von wenigstens 20 %, vorzugsweise 30 bis 95 %, hat.

5.  Verwendung gemäß einem der vorangehenden Ansprüche, wobei das Einkapselungsmaterial ein oder mehrere Protein(e) und/oder Kohlenhydrat(e) umfasst.

6.  Verwendung gemäß Anspruch 5, wobei das Protein aus Gelatinen, Milchproteinen, Albumin und Pflanzenproteinen ausgewählt ist.

7.  Verwendung gemäß Anspruch 5, wobei das Kohlenhydrat aus der Gruppe, bestehend aus Monosacchariden, Polysacchariden und Zuckeralkoholen, ausgewählt ist.

8.  Verwendung gemäß Anspruch 7, wobei das Kohlenhydrat aus der Gruppe, bestehend aus Gummi arabicum, Carrageenan, Agar-Agar, Alginaten, Pektinen und Pektaten, ausgewählt ist.

9.  Verwendung gemäß einem der vorangehenden Ansprüche, wobei das eingekapselte Sättigungsmittel durch ein einfaches oder kompliziertes Koazervierungsverfahren eingekapselt wird.

10. Verwendung gemäß einem der vorangehenden Ansprüche, wobei das Nahrungsmittelprodukt eine Menge von 0,1 bis 10 Gewichts-% des Sättigungsmittels umfasst.

11. Verwendung gemäß einem der vorangehenden Ansprüche, wobei das eingekapselte Sättigungsmittel eine gewichtsgemittelte mittlere Partikelgröße im Bereich von 0,5 bis 250 $\mu$m hat.

12. Verwendung gemäß einem der vorangehenden Ansprüche, wobei das eingekapselte Sättigungsmittel vornehmlich im Jejunum und/oder Ileum der Testperson freigesetzt wird.

13. Verwendung gemäß einem der vorangehenden Ansprüche, wobei das Produkt ein Mahlzeitersatzprodukt oder ein Gewichtsregulierungsprodukt ist.

**Revendications**

1. Utilisation d'un agent de satiété encapsulé qui comprend des protéines, des glucides ou des lipides, l'agent de satiété étant encapsulé par un matériau d'encapsulation réticulé, pour la fabrication d'un produit destiné au traitement de l'obésité ou du surpoids, le produit étant un produit alimentaire qui comprend au moins 2 % en poids de protéine, à l'exclusion de toute protéine présente en tant que ou dans l'agent de satiété encapsulé, et l'agent de satiété, lors de la consommation du produit alimentaire par un sujet, étant en outre principalement libéré du matériau d'encapsulation dans l'intestin de ce sujet.

2. Utilisation selon la revendication 1, dans laquelle l'agent de satiété est un lipide.

3. Utilisation selon la revendication 1 ou 2, dans laquelle l'agent de satiété est choisi parmi les mono-, di-, ou tri-glycérides, leurs acides gras libres, leurs sels comestibles, leurs esters non-glycériques, pouvant être hydrolysés en présence d'enzymes gastro-intestinales et leurs mélanges.

4. Utilisation selon l'une quelconque des revendications précédentes, dans laquelle le matériau d'encapsulation a un degré de réticulation d'au moins 20 %, de préférence de 30 à 95 %.

5. Utilisation selon l'une quelconque des revendications précédentes, dans laquelle le matériau d'encapsulation comprend une ou plusieurs protéines et/ou glucides.

6. Utilisation selon la revendication 5, dans laquelle la protéine est choisie parmi les gélatines, les protéines du lait, l'albumine et les protéines végétales.

7. Utilisation selon la revendication 5, dans laquelle le glucide est choisi dans le groupe constitué par les monosaccharides, les polysaccharides et les polyols.

8. Utilisation selon la revendication 7, dans laquelle l'hydrate de carbone est choisi dans le groupe constitué par la gomme arabique, la carragénine, l'agar agar, les alginates, les pectines et les pectates.

9. Utilisation selon l'une quelconque des revendications précédentes, dans laquelle l'agent de satiété encapsulé est encapsulé par un procédé de coacervation simple ou complexe.

10. Utilisation selon l'une quelconque des revendications précédentes, dans laquelle le produit alimentaire comprend une quantité de 0,1 à 10 % en poids de l'agent de satiété.

11. Utilisation selon l'une quelconque des revendications précédentes, dans laquelle l'agent de satiété encapsulé a une taille de particules moyenne en poids dans la plage de 0,5 à 250 $\mu$m.

12. Utilisation selon l'une quelconque des revendications précédentes, dans laquelle l'agent de satiété encapsulé est principalement libéré du matériau d'encapsulation dans le jéjunum et/ou l'iléon du sujet.

13. Utilisation selon l'une quelconque des revendications précédentes, dans laquelle le produit est un substitut de repas ou un produit destiné à lutter contre la prise de poids.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 5688547 A
- US 4198400 A
- WO 0117541 A
- WO 9902041 A
- WO 0200042 A
- WO 0117377 A
- EP 246294 A
- US 5753253 A
- US 6267988 B
- US 20020094346 A

- DE 2701361
- EP 782883 A
- US 20030203004 A
- US 5071706 A
- US 3956172 A
- US 5023024 A
- US 5051304 A
- US 5035896 A
- US 5266335 A
- WO 0241711 A

### Non-patent literature cited in the description

- **Gregg W. Van.** Citters in The Ileal Brake: A fifteen-year progress report. *Current Gastronenterology Reports,* 1999, vol. 1, 4040-409
- **Dobson et al.** Does the site of intestinal delivery of oleic acid alter the ileal brake response. *Int Journal of Pharmaceutics,* 2000, vol. 195, 63-70
- **Joseph et al.** Indomethacin sustained release from alginate-gelatin or pectin-gelatin coacervates. *Int Journal of Pharmaceutics,* 1995, vol. 126, 161-168
- **Meyer et al.** The effect of gelatin cross-linking on the bioequivalence of hard and soft gelatin acetaminophen capsules. *Pharmaceutical Research,* 2000, vol. 17 (8

- **Digenis et al.** Cross-linking of gelatin capsules and its relevance to their in-vitro in-vivo performance. *Journal of Pharmaceutical Sciences,* July 1994, vol. 83 (7
- **Gregg W. Van.** Citters in The Ileal Brake: A fifteen-year progress report. *Current Gastronenterology Reports,* 1999, vol. I, 4040-409
- **P.L. Madan.** *Drug Development and Industrial Pharmacy,* 1978, vol. 4 (1), 95-116
- **P.B. Deary.** Microencapsulation and drug processes. 1988
- Dissolution: Apparatus II. *United States Pharmacopeia,* 1990, vol. XXII, 711